# EUROPÄISCHE PATENTANMELDUNG

(11) **EP 0 588 419 A2**
(43) Veröffentlichungstag der Anmeldung: **23.03.1994**
(21) Anmeldenummer: 93202605.7
(22) Anmeldetag: 07.09.1993
(51) Int. Cl.: H04N 7/137

(54) **Adaptiver DPCM-Kodierer**

(30) Priorität: 14.09.1992 DE 4230728
(71) Anmelder: Philips Patentverwaltung GmbH, 22335 Hamburg (DE); Philips Electronics N.V., 5621 BA Eindhoven (NL)
(72) Erfinder: Zhang, Wenjun, Dr., D-20097 Hamburg (DE); Barthel, Tom, D-20097 Hamburg (DE); Wenger, Jean, D-20097 Hamburg (DE)
(74) Vertreter: von Laue, Hanns-Ulrich, Dipl.-Ing.

(57) **Zusammenfassung**

Für einen adaptiven DPCM-Kodierer für Abtastwerte eines Videosignals mit wenigstens zwei Quantisierern, welche Prädiktionsfehler, die sich aus der Differenz eines Abtastwertes des Videosignals und eines Prädiktionswertes ergeben, mit verschiedenen Quantisierungskennlinien quantisieren, und mit einem Pufferspeicher zur Zwischenspeicherung der quantisierten und gegebenenfalls codierten Prädiktionswerte, sind für möglichst feine Quantisierung wenigstens zwei Prädiktoren (5 und 6), welche nach verschiedenen gewonnene Prädiktonswerte liefern, ein Variable-Wortlängen-Kodierer (8) und eine Steuerschaltung (9) vorgesehen, die in Abhängigkeit vom Füllstand des Pufferspeichers (7), vom aktuell verwendeten Quantisierer (1, 2, 3, 4) und vom aktuell verwendeten Prädiktor (5, 6) einen vorbestimmten Quantisierer (1, 2, 3, 4) und einen vorbestimmten Prädiktor (5, 6) einschaltet.

## Beschreibung

Die Erfindung betrifft einen adaptiven DPCM-Kodierer für Abtastwerte eines Videosignals mit wenigstens zwei Quantisierern, welche Prädiktionsfehler, die sich aus der Differenz eines Abtastwertes des Videosignals und eines Prädiktionswertes ergeben, mit verschiedenen Quantisierungskennlinien quantisieren, und mit einem Pufferspeicher zur Zwischenspeicherung der quantisierten und gegebenenfalls codierten Prädiktionswerte.

Aus der DE-OS 38 34 476 ist eine Einrichtung zur Kodierung eines Videosignals bekannt, bei der in Abhängigkeit vom Füllstand eines Pufferspeichers des Kodierers Quantisierungskennlinien gesteuert werden. Dabei wird das Videosignal, das zuvor einer diskreten Kosinus-Transformation unterzogen wurde, in einem Multiplizierer mit verschiedenen Skalierungsfaktoren multipliziert und anschließend quantisiert.

Es ist Aufgabe der Erfindung, einen adaptiven DPCM-Kodierer zu schaffen, welcher DPCM-Signale mit möglichst geringer Bitrate bei sichtbarer Beeinflussung der Bildqualität liefert.

Diese Aufgabe ist erfindungsgemäß dadurch gelöst, daß wenigstens zwei Prädiktoren, welche nach verschiedenen Kriterien gewonnene Prädiktionswerte liefern, ein Variable-Wortlängen-Kodierer und eine Steuerschaltung vorgesehen sind, die in Abhängigkeit vom Füllstand des Pufferspeichers, vom aktuell verwendeten Quantisierer und vom aktuell verwendeten Prädiktor einen vorbestimmten Quantisierer und einen vorbestimmten Prädiktor einschaltet.

In dem adaptiven DPCM-Kodierer wird für jeden Abtastwert die Differenz mit einem Prädiktionswert gebildet. Dieser Wert ist der sogenannte Prädiktionsfehler. Dieser Prädiktionsfehler wird quantisiert und nachfolgend kodiert. Zusätzlich ist ein Pufferspeicher vorgesehen, in den entweder die schon quantisierten aber noch nicht kodierten Werte eingelesen werden können, der aber auch dem Kodierer nachgeschaltet sein kann und dem in diesem Falle also die bereits kodierten Worte eingelesen werden. In jedem Falle dient der Pufferspeicher dazu, eine Zwischenspeicherung vorzunehmen, um die quantisierten und gegebenenfalls bereits kodierten Worte zwischenzuspeichern. Dies ist erforderlich, da der Variable-Wortlängenkodierer Worte verschiedener Wortlängen liefert und somit die Bitrate ausgangsseitig schwankt. Die Bitrate über einen nachfolgend vorgesehenen Übertragungskanal ist jedoch im Regelfall konstant. Es muß also ein Ausgleich zwischen der schwankenden Bitrate, die der Kodierer liefert, und einer konstanten Bitrate, die einen nachfolgenden Übertragungskanal anbietet, geschaffen werden.

Der Prädiktionswert kann dabei auf verschiedene Weise gewonnen werden. In einem Videosignal liegen verschiedene Korrelationen vor, die für verschiedene Prädiktionsmethoden genutzt werden können. Je nach Bildinhalt kann die eine Prädiktionsmethode oder die andere Prädiktonsmethode günstiger sein, d.h. einen Wert liefern, der näher bei dem aktuellen Abtastwert des Videosignals liegt.

Ferner sind verschiedene Quantisierer vorgesehen, die verschieden fein quantisieren.

Die Steuerschaltung nimmt in Abhängigkeit vom Füllstand des Pufferspeichers, vom aktuell verwendeten Quantisierer und aktuell verwendeten Prädiktor eine Umschaltung zwischen den Quantisierern und den Prädiktoren vor. Dabei ist für jeden Zustand des Pufferspeichers des aktuell eingeschalteten Quantisierers und des aktuell eingeschalteten Prädiktors vorgegeben, welchen Quantisierer und welchen Prädiktor in Abhängigkeit des Füllstandes des Pufferspeichers einzuschalten ist. Die Steuerschaltung überprüft also laufend den Füllstand und kann anhand dieses Füllstandes je nach eingeschaltetem Quantisierer und Prädiktor auf einen anderen Quantisierer und/oder anderen Prädiktor umschalten.

Dies ist vorteilhaft, da der Füllstand des Pufferspeichers ein Maß dafür ist, wie gut die Prädiktionswerte sind, die der eingeschaltete Prädiktor liefert. Sind diese Werte gut, so ist der Prädiktionsfehler gering, so daß die Wortlängen der Worte, die der Variable-Wortlängen-Kodierer liefert, klein sind. Somit wird der Füllstand des Pufferspeichers relativ klein sein bzw. die Tendenz haben, abzunehmen. Sind die Prädiktionswerte jedoch schlecht, d.h. die Differenz aus dem Abtastwert des Videosignals und des zugeordneten Prädiktonswertes ist relativ groß, so sind die Wortlängen, die der Kodierer liefert, relativ groß, so daß der Füllstand des Pufferspeichers tendentiell zunimmt. Gleichzeitig kann die Steuerschaltung zwischen den verschiedenen Quantisierern umschalten, so daß beispielsweise bei einem günstigen Prädiktor eine feine Quantisierung eingeschaltet werden kann, da die Prädiktionsfehler gering sind und der Variable-Wortlängen-Kodierer somit kurze Worte liefert.

Der erfindungsgemäße adaptive DPCM-Kodierer gestattet somit eine gute Anpassung der Art der Kodierung an das Videosignal und an die Bitrate eines nachfolgenden Übertragungskanals. Der Schaltungsaufwand ist dabei gering.

Gemäß einer Ausgestaltung der Erfindung ist vorgesehen, daß die Ausgangswerte des jeweils eingeschalteten Quantisierers direkt in den Pufferspeicher eingelesen werden und daß der Variable-Wortlängen-Kodierer dem Pufferspeicher nachgeschaltet ist. Die Ausgangswerte der Quantisierer haben immer gleiche Wortlänge. Diese Ausgangswerte werden laufend in den Pufferspeicher eingelesen. Sie werden von dem Variable-Wortlängen-Kodierer aus diesem wieder ausgelesen und kodiert. Je nach der Größe dieser Werte bildet der Variable-Wortlängen-Kodierer unterschiedlich lange Worte. Sind die Werte gering, also die Prädiktionsfehler klein, so bildet der Variable-Wortlängen-Kodierer Worte kurzer Länge, die in einem nachfolgenden Übertragungskanal relativ wenig Zeit zur Übertragung beanspruchen. Somit kann der Variable-Wortlängen-Kodierer schneller wieder neue Werte aus dem Pufferspeicher auslesen. Gegebenenfalls werden diese Werte schneller ausgelesen, als neue Ausgangswerte des jeweils eingeschalteten Quantisierer in dem Pufferspeicher eingelesen werden. In diesem Falle sinkt der Füllstand des Pufferspeichers. Im umgekehrten Falle steigt dieser Füllstand bei relativ großen Prädiktionsfehlern und damit relativ großen Wortlängen der von dem Kodierer gebildeten Kodeworte. Bei dieser Anordnung des Pufferspeichers zwischen den Quantisierern und den nachgeschalteten Kodierer ergibt sich eine einfache Anordnung, in der nur der Pufferspeicherfüllstand ausgewertet werden muß.

Gemäß einer weiteren Ausgestaltung der Erfindung ist für den adaptiven DPCM-Kodierer vorgesehen, daß es sich bei dem Prädiktionswert eines ersten Prädiktors um den Abtastwert handelt, der dem aktuellen Abtastwert vorangegangen ist, und daß es sich bei dem Prädiktionswert eines zweiten Prädiktors um den Abtastwert handelt, der dem aktuellen Abtastwert um die Dauer eines ganzen Videobildes vorangegangen ist.

Bei einem Videosignal können insbesondere zwei Korrelationen vorliegen, die für entsprechende Prädiktionswerte herangezogen werden können. Zum einen ist es innerhalb einer Bildzeile des Videosignals so, daß aufeinanderfolgende Bildpunkte und somit in digitalen Bildsignal aufeinanderfolgende Abtastwerte ähnliche Größe aufweisen. Dies gilt insbesondere für große Flächen im Bild, die gleiche Helligkeit und gleiche Farbwerte haben. Oftmals ist es aber auch so, daß aufeinanderfolgende Bilder sehr ähnlichen Bildinhalt haben. Dies bedeutet, daß ein Abtastwert eines Bildes an einer bestimmten Position einen ähnlichen Wert aufweist wie der Abtastwert desselben Bildpunktes im vorigen Bild. Ist dies der Fall, ist der aktuelle Abtastwert, der dem Bildpunkt um die Dauer eines ganzen Videobildes vorangegangen ist, ein günstiger Prädiktionswert, der einen geringen Prädiktionsfehler liefert.

In dem adaptiven DPCM-Kodierer können daher vorteilhafterweise wenigstens zwei Prädiktoren vorgesehen sein, von denen je einer nach den beiden oben beschriebenen Methoden arbeitet. Der Füllstand des Pufferspeichers stellt ein Maß dafür dar, wie gut der eingeschaltete Prädiktor ist.

Eine weitere Ausgestaltung der Erfindung sieht vor, daß in dem Pufferspeicher ein erster und ein zweiter, größerer Schwellwert für den Füllstand vorgegeben sind und daß die Steuerschaltung als Kriterium für den aktuellen Füllstand des Pufferspeicher heranzieht, ob dieser keinen, den ersten oder beide Schwellwerte überschritten hat.

Es ist nicht unbedingt erforderlich, den Füllstand des Pufferspeichers kontinuierlich festzustellen. Für eine möglichst einfache Anordnung genügt es, festzustellen, wie sich der aktuelle Füllstand in Relation zu zwei Schwellwerten verhält. Dabei ist der erste, kleinere Schwellwert beispielsweise so gewählt, daß er bei etwa einem Drittel Füllstand des Pufferspeichers liegt. Der zweite, größere Schwellwert kann beispielsweise bei etwa drei Viertel Füllstand des Pufferspeichers liegen. Beide Schwellwerte werden auf Überschreiten durch den aktuellen Füllstand des Pufferspeichers überprüft, so daß die Steuerschaltung anhand dieser beiden Informationen den ungefähren Füllstand des Pufferspeichers kennt und eine entsprechende Umschaltung der Quantisierer bzw. Prädiktoren vornehmen kann.

Dabei können vorteilhafterweise, wie nach einer weiteren Ausgestaltung der Erfindung vorgesehen ist, vier Quantisierer mit unterschiedlich feiner Quantisierung vorgesehen sein, von denen der erste Quantisierer mit der feinsten Quantisierung arbeitet, der zweite Quantisierer mit einer gröberen Quantisierung, der dritte Quantisierer mit einer wiederum gegenüber dem zweiten Quantisierer gröberen Quantisierung und der vierte Quantiserer mit der gröbsten Quantisierung arbeitet.

Die weiteren Unteransprüche geben vorteilhafte Kriterien an, nach denen die Steuerschaltung in Abhängigkeit des eingeschalteten Quantisierer, des eingeschalteten Prädiktors und des Überschreitens einer oder beider Schwellwerte des Pufferspeicherfüllstands eine Umschaltung zwischen den Quantisierern und/oder Prädiktoren vornehmen kann. Es wird dabei je nach eingeschaltetem Quantisierer und Prädiktor und Füllstand des Pufferspeichers darauf geschlossen, welcher Quantisierer und Prädiktor vorteilhafterweise eingeschaltet wird. Bei der Umschaltung zwischen den Prädiktoren wird bei bestimmten Konstellationen der drei Kriterien auf einen anderen Prädiktor umgeschaltet und es wird nachfolgend abgewartet, wie sich der Füllstand des Pufferspeichers verhält. Sinkt der Füllstand tendentiell, so ist der neu eingeschaltete Prädiktor besser als der alte. Steigt der Füllstand, so war der alte Prädiktor günstiger und es wird wieder auf diesen alten Prädiktor zurückgeschaltet. Unabhängig davon, welcher Prädiktor eingeschaltet ist, gilt allgemein, daß auf einen feineren Quantisierer umgeschaltet werden kann, wenn der Füllstand des Pufferspeichers sinkende Tendenz hat, bzw. einen der Schwellwerte, insbesondere die niedrigeren, unterschreitet.

Nachfolgend wird anhand der Zeichnung ein Ausführungsbeispiel der Erfindung näher erläutert. Es zeigen:
Fig. 1 ein Blockschaltbild eines adaptiven DPCM-Kodierers und
Fig. 2 eine schematische Darstellung der Arbeitsweise des DPCM-Kodierers gemäß Fig. 1.

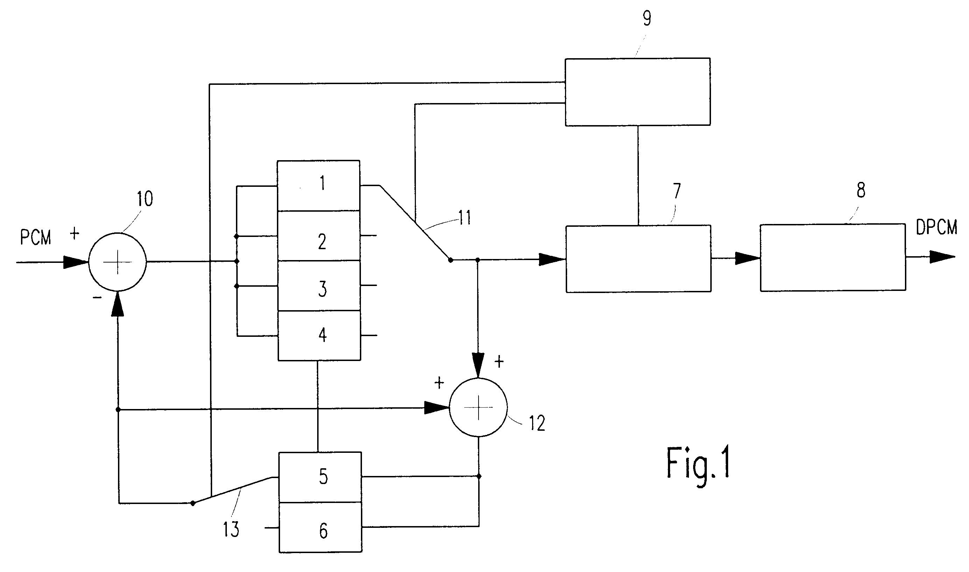

Ein in Fig. 1 in Form eines schematischen Blockschaltbildes dargestellter adaptiver DPCM-Kodierer weist vier Quantisierer 1, 2, 3 und 4 auf, von denen der Quantisierer 1 mit der feinsten, der Quantisierer 2 mit einer gegenüber diesem etwas gröberen, der Quantisierer 3 mit einer wiederum gegenüber dem Quantisierer 2 gröberen und der Quantisierer 4 mit der gröbsten Quantisierung arbeitet.

Es sind ferner zwei Prädiktoren 5 und 6 vorgesehen, die nach unterschiedlichen Prädiktionsverfahren arbeiten und von denen der erste Prädiktor 5 als Prädiktionswert denjenigen Abtastwert liefert, der dem aktuellen Abtastwert vorangegangen ist. Der zweite Prädiktor 6 liefert als Prädiktionswert den Abtastwert, der dem aktuellen Abtastwert um die Dauer eines ganzen Videobildes vorangegangen ist.

Der in Fig. 1 dargestellten Schaltungsanordnung wird eingangsseitig ein digitales Videosignal zugeführt, das in der Fig. mit PCM gekennzeichnet ist und das auf einen ersten Eingang eines Addierers 10 gelangt. Das Ausgangssignal des Addierers 10 gelangt auf die vier Quantisierer 1, 2, 3 und 4, zwischen deren Ausgängen mittels eines Umschalters 11 umgeschaltet werden kann. Dieses umgeschaltete Ausgangssignal gelangt auf einen ersten Eingang eines weiteren Addierers 12, dessen Ausgangssignal den beiden Prädiktoren 5 und 6 zugeführt wird. Zwischen den Ausgangssignalen dieser beiden Prädiktoren kann mittels eines weiteren Umschalters 13 umgeschaltet werden. Dieses umgeschaltete Signal gelangt an einen invertierenden zweiten Eingang des Addierers 10 und einen nicht invertierenden zweiten Eingang des Addierers 12.

In dieser Schleife, gebildet durch den Addierer 10, die Quantisierer 1 bis 4, den Addierer 12 und die Prädiktoren 5 und 6 wird jeweils die Differenz zwischen dem aktuellen Abtastwert und dem Prädiktionswert des jeweils ausgewählten Prädiktors die Differenz gebildet, die durch eine der Quantisierer 1 bis 4 quantisiert wird.

Dieses so quantisierte Signal, bei dem es sich um die quantisierten Prädiktionsfehlersignal handelt, wird einem Pufferspeicher 7 zugeführt, der als sogenannter First-In-First-Out-Speicher (FIFO) ausgelegt ist. Dem Pufferspeicher 7 ist ein Variable-Wortlängen-Kodierer nachgeschaltet, der die quantisierten Prädiktionsfehler entsprechend ihrer statistischen Häufigkeit kodiert und so ausgangsseitig das entropiekodierte DPCM-Signal liefert.

Der Füllstand des Pufferspeichers 7 wird anhand von zwei Schwellwerten durch eine Steuerschaltung 9 überprüft, welche mittels Steuerung des Umschalters 11 und Steuerung des Umschalters 13 zwischen verschiedenen Quantisierern und Prädiktoren umschalten kann. Dies geschieht in Abhängigkeit des aktuellen Füllstands des Pufferspeichers, der anhand von zwei Schwellwerten überprüft wird.

Der Füllstand des Pufferspeichers 7 ändert sich laufend, was dadurch bedingt ist, daß eingangsseitig die in dem Pufferspeicher 7 eingeschriebenen und von den Quantisierern 1 bis 4 gelieferten Worte immer gleiche Wortlänge haben und kontinuierlich eingeschrieben werden, daß aber andererseits diese Worte in unterschiedlichen Zeitabständen von dem Kodierer 8 aus dem Pufferspeicher 7 wieder ausgelesen werden. Dies ist dadurch bedingt, daß der Kodierer 8 je nach Größe des ausgelesenen Wertes unterschiedlich lange DPCM-Worte bildet, also Worte verschiedener Wortlängen. Sind die ausgelesenen Werte relativ klein, also werden Worte kurzer Länge gebildet, die in einen nachfolgenden Übertragungskanal mit einer bestimmten Übertragungskapazität, d.h. also einer bestimmten maximalen Bitrate, untergebracht werden können. Sind die ausgelesenen Werte jedoch relativ groß, so sind auch die Wortlängen der DPCM-Worte länger, so daß weniger Worte untergebracht werden können und somit auch seltener wieder ein neues Wort aus dem Pufferspeicher 7 ausgelesen werden kann. Der schwankende Füllstand des Pufferspeichers 7 ergibt sich also durch unterschiedlich lange Wartezeiten zwischen zwei durch den Kodierer 8 vorgenommenen Auslesevorgängen.

Die Steuerschaltung nimmt daher in Abhängigkeit des Füllstandes des Pufferspeichers, der anhand des Überschreitens keines der beiden Schwellwerte, eines der Schwellwerte oder beider Schwellwerte festgestellt wird, und in Abhängigkeit des eingeschalteten Prädiktors und des aktuell eingeschalteten Quantisierers eine Umschaltung zwischen den vier Quantisierern 1 bis 4 und oder den Prädiktoren 5 und 6 vor.

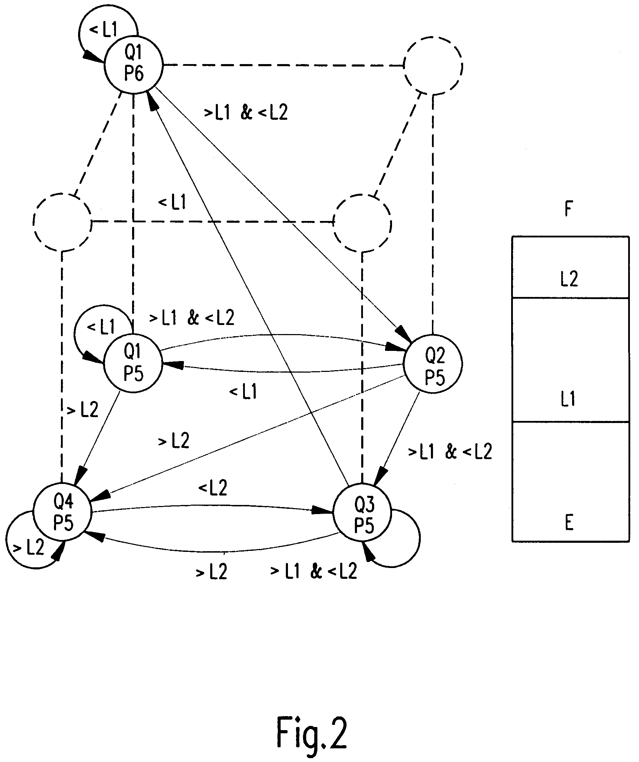

Diese Vorgehensweise wird nachfolgend anhand einer schematischen Darstellung gemäß der Fig. 2 näher erläutert.

In Fig. 2 ist als Rechteck schematisch der Pufferspeicher 7 entsprechend der Schaltung gemäß Fig. 1 dargestellt. Die schematische Darstellung in Fig. 2 zeigt vier Füllstände des Pufferspeichers. Der Füllstand E stellt den Fall dar, daß der Pufferspeicher 7 leer ist. Der erste Schwellwert ist in der schematischen Darstellung gemäß Fig. 2 mit L1 gekennzeichnet Dieser Schwellwert liegt etwa bei einem Drittel Füllstand des Pufferspeichers. Der zweite Schwellwert ist in der Fig. 2 mit L2 gekennzeichnet und entspricht etwa einem Füllstand von drei Viertel des Pufferspeichers. Der Pufferspeicher ist bei einer Markierung F gemäß Fig. 2 vollständig gefüllt.

Ein ebenfalls in Fig. 2 dargestellter Quader deutet die verschiedenen Entscheidungsstrategien der Steuerschaltung an, die diese in Abhängigkeit des Füllstandes und des eingeschalteten Quantisierers und Prädiktors vornimmt.

In der unteren Ebene des Quaders sind die vier Quantisierer Q1, Q2, Q3 und Q4 entsprechend den Quantisierers 1 bis 4 der Fig. 1 schematisch angedeutet. Für diese Darstellung der unteren Ebene des Quaders gemäß Fig. 2 gilt, daß in jenem Falle der erste Prädiktor P5 eingeschaltet ist, der dem Prädiktor 5 entsprechend Fig. 1 entspricht. Dieser Prädiktor liefert als Prädiktionswert denjenigen Abtastwert, der dem aktuellen Abtastwert vorangegangen ist.

Für die obere Ebene des Quaders gemäß Fig. 2 gilt, daß der zweite Prädiktor eingeschaltet ist, der als P 6 gekennzeichnet ist und der dem Prädiktor 6 der Darstellung gemäß Fig. 1 entspricht. Dieser Prädiktor liefert als Prädiktionswert denjenigen Abtastwert, der dem Abtastwert und die Dauer eines ganzen Videobildes vorangegangen ist.

In der oberen Ebene des Quaders gemäß Fig. 2 ist nur die Kombination dieses zweiten Prädiktors P6 mit dem ersten Quantisierer Q1 angedeutet. Der zweite Prädiktor P6 wird also nur in Kombination mit dem ersten Quantisierer Q1 eingeschaltet, der unter den vier Quantisierern die feinste Quantisierungskennlinie aufweist. Der Grund hierfür liegt darin, daß Umschaltung auf den zweiten Prädiktor, also diejenige Prädiktionsmethode, die sich am vorigen Videobild orientiert, nur dann sinnvoll ist, wenn mit ihr gleichzeitig auch auf eine feine Quantisierung umgeschaltet werden kann. Prinzipiell dienen die Quantisierer Q1, Q2 und Q3 nur zum Zweck, daß beim Wechsel des Bildinhaltes, der ein Umschalten zwischen den beiden Prädiktionsmethoden bewirkt, der Pufferspeicher nicht volläuft.

In der Darstellung gemäß Fig. 2 sind für die fünf Kombinationsmöglichkeiten der vier Quantisierer und der zwei Prädiktoren jeweils Verbindungslinien mit Pfeilen eingetragen, an denen das Entscheidungskriterium bezüglich der beiden Schwellwerte L1 und L2 des Füllstandes des Pufferspeichers markiert ist.

Ist beispielsweise zunächst der erste Quantisierer Q1 und der erste Prädiktor P5 eingeschaltet, so bleiben diese solange eingeschaltet, wie der Füllstand im Pufferspeicher unterhalb des Schwellwertes 1 liegt. Wird der Schwellwert L1 überschritten, jedoch der Schwellwert L2 noch unterschritten, so schaltet die Steuerschaltung auf den Quantisierer Q2 um. Der Prädiktor P5 bleibt noch eingeschaltet. Wird dagegen bei eingeschaltetem ersten Quantisierer Q1 der zweite Schwellwert L2 überschritten, so wird direkt auf den Quantisierer 4 mit der gröbsten Quantisierung umgeschaltet.

Ist der zweite Quantisierer Q2 eingeschaltet, was immer nur in Verbindung mit dem ersten Prädiktor P5 der Fall ist, so wird bei einem Unterschreiten des ersten Schwellwertes L1 wieder auf den ersten Quantisierer umgeschaltet. Dies ist möglich, da sich der Füllstand des Pufferspeichers tendentiell verringert und somit wieder eine feinere Quantisierung des Videobildes vorgenommen werden kann, ohne daß die Gefahr besteht, daß der Pufferspeicher überläuft. Wird dagegen bei eingeschaltetem zweiten Quantisierer der erste Schwellwert überschritten, so wird auf den Quantisierer Q3 umgeschaltet. Wird auch der zweite Schwellwert L2 überschritten, wird auf den Quantisierer Q4 umgeschaltet.

Bei eingeschaltetem dritten Quantisierer Q3 wird dieser solange eingeschaltet bleiben, wie der erste Schwellwert L1 zwar überschritten, der zweite Schwellwert L2 jedoch noch unterschritten wird. Wird bei eingeschaltetem Quantisierer Q3 der erste Schwellwert unterschritten, so wird auf die andere Prädiktionsmethode umgeschaltet und der zweite Prädiktor P6 aktiviert. Dies geschieht in Verbindung mit einer Aktivierung des ersten Quantisierers Q1. Liegt nach diesem Umschaltvorgang der Füllstand des Pufferspeichers unterhalb des Schwellwertes L1, so war die Entscheidung, auf die andere Prädiktionsmethode zu wechseln, gut. Der Quantisierer Q1 bleibt also in Verbindung mit dem zweiten Prädiktor P6 eingeschaltet. Wird dagegen der erste Schwellwert überschritten, so war die zweite Prädiktionsmethode des Prädiktors P6 nicht günstig und es wird wieder auf die erste Prädiktionsmethode, nämlich den Prädiktor P5 umgeschaltet. Dieses geschieht in Verbindung mit Einschaltung des Quantisierers Q2.

Wird dagegen bei eingeschaltetem Quantisierer Q3 und erstem Prädiktor P5 auch der zweite Schwellwert überschritten, so muß auf den gröbsten Quantisierer Q4 umgeschaltet werden. Dies bei gleichzeitigem Beibehalten des ersten Prädiktors P5.

Bei gröbster Quantisierung mittels des Quantisierers Q4 kann es vorkommen, daß gleichwohl der zweite Schwellwert überschritten wird, in diesem Falle besteht nur die Möglichkeit, den Quantisierer Q4 eingeschaltet zu lassen. Wird dagegen dieser zweite Schwellwert L2 wieder unterschritten, wird wieder auf den Quantisierer Q3 zurückgeschaltet.

Dieser Entscheidungsstrategie schaltet immer, sofern der Pufferspeicher-Füllstand dies zuläßt, auf einen möglichst feinen Quantisierer. Darüber hinaus wird dann, wenn der erste Prädiktor relativ schlechte Werte geliefert hat und infolgedessen der Quantisierer 3 mit der zweitgrößten Quantisierung eingeschaltet ist, der Versuch unternommen, auf die andere Prädiktionsmethode, die sich im vorigen Vollbild orientiert, umzuschalten. Nach dem Umschaltvorgang wird in Abhängigkeit des Pufferspeicher-Füllstandes festgestellt, ob diese zweite Prädiktionsmethode günstig ist. Ist dies der Fall, bleibt sie eingeschaltet, andernfalls wird auf die erste Prädiktionsmethode zurückgeschaltet.

Der adaptive DPCM-Kodierer gemäß Fig. 1 erlaubt also mittels der Umschaltstrategie gemäß Fig. 2 eine optimale Wahl der Quantisierung, die möglichst fein sein soll und der Prädiktionsart, die eine möglichst feine Quantisierung gestattet.

## Patentansprüche

1. Adaptiver DPCM-Kodierer für Abtastwerte eines Videosignals mit wenigstens zwei Quantisierern (1, 2, 3, 4), welche Prädiktionsfehler, die sich aus der Differenz eines Abtastwertes des Videosignals und eines Prädiktionswertes ergeben, mit verschiedenen Quantisierungskennlinien quantisieren, und mit einem Pufferspeicher (7) zur Zwischenspeicherung der quantisierten und gegebenenfalls codierten Prädiktionswerte,
dadurch gekennzeichnet, daß wenigstens zwei Prädiktoren (5, 6), welche nach verschiedenen Kriterien gewonnene Prädiktionswerte liefern, ein Variable-Wortlängen-Kodierer (8) und eine Steuerschaltung (9) vorgesehen sind, die in Abhängigkeit vom Füllstand des Pufferspeichers (7), vom aktuell verwendeten Quantsierer (1, 2, 3, 4) und vom aktuell verwendeten Prädiktor (5, 6) einen vorbestimmten Quantisierer (1, 2, 3, 4) und einen vorbestimmten Prädiktor (5, 6) einschaltet.

2. Adaptiver DPCM-Kodierer nach Anspruch 1,
dadurch gekennzeichnet, daß die Ausgangswerte des jeweils eingeschalteten Quantisierers (1, 2, 3, 4) direkt in den Pufferspeicher (7) eingelesen werden und daß der Variable-Wortlängen-Kodierer (8) dem Pufferspeicher (7) nachgeschaltet ist.

3. Adaptiver DPCM-Kodierer nach einem der Ansprüche 1 oder 2,
dadurch gekennzeichnet, daß es sich bei dem Prädiktionswert eines ersten Prädiktors (5) um den Abtastwert handelt, der dem aktuellen Abtastwert vorangegangen ist, und daß es sich bei dem Prädiktionswert eines zweiten Prädiktors (6) um den Abtastwert handelt, der dem aktuellen Abtastwert um die Dauer eines ganzen Videobildes vorangegangen ist.

4. Adaptiver DPCM-Kodierer nach einem der Ansprüche 1 bis 3,
dadurch gekennzeichnet, daß in dem Pufferspeicher (7) ein erster (L1) und ein zweiter, größerer Schwellwert (L2) für den Füllstand vorgegeben sind und daß die Steuerschaltung (9) als Kriterium für den aktuellen Füllstand des Pufferspeicher (7) heranzieht, ob dieser keinen, den ersten oder beide Schwellwerte (L1, L2) überschritten hat.

5. Adaptiver DPCM-Kodierer nach einem der Ansprüche 1 bis 4,
dadurch gekennzeichnet, daß vier Quantisierer (1, 2, 3, 4) vorgesehen sind, von denen der erste Quantisierer (1) mit der feinsten Quantisierung arbeitet, der zweite Quantisierer (2) mit einer gröberen Quantisierung, der dritte Quantisierer (3) mit einer wiederum gegenüber dem zweiten Quantisierer (2) gröberen Quantisierung und der vierte Quantiserer (4) mit der gröbsten Quantisierung arbeitet.

6. Adaptiver DPCM-Kodierer nach den Ansprüchen 3, 4 und 5,
dadurch gekennzeichnet, daß die Steuerschaltung (9) bei eingeschaltetem ersten Quantisierer (1) und eingeschaltetem ersten Prädiktor (5) bei Unterschreiten des ersten Schwellwertes (L1) diese unverändert eingeschaltet läßt, daß die Steuerschaltung (9) bei Überschreiten des ersten (L1) und Unterschreiten des zweiten Schwellwertes (L2) auf den zweiten Quantisierer (2) und den ersten Prädiktor (5) und bei Überschreiten des zweiten Schwellwertes (12) auf den vierten Quantisierer (4) und den ersten Prädiktor (5) umschaltet.

7. Adaptiver DPCM-Kodierer nach einem der Ansprüche 3 bis 6,
dadurch gekennzeichnet, daß die Steuerschaltung (9) bei eingeschaltetem zweiten Quantisierer (2) und eingeschaltetem ersten Prädiktor (5) bei Unterschreiten des ersten Schwellwertes (L1) auf den ersten Quantisierer (1) und ersten Prädiktor (5), bei Überschreiten des ersten (L1) und Unterschreiten des zweiten Schwellwertes (L2) auf den dritten Quantisierer (3) und ersten Prädiktor (5) und bei Überschreiten des zweiten Schwellwertes (L2) auf den vierten Quantisierer (4) und ersten Prädiktor (5) umschaltet.

8. Adaptiver DPCM-Kodierer nach einem der Ansprüche 3 bis 7,
dadurch gekennzeichnet, daß die Steuerschaltung (9) bei eingeschaltetem dritten Quantisierer (3) und eingeschaltetem ersten Prädiktor (5) bei Überschreiten des ersten (L1) und Unterschreiten des zweiten Schwellwertes (L2) den dritten Quantisierer (3) und ersten Prädiktor (5) eingeschaltet läßt und daß die Steuerschaltung (5) bei Unterschreiten des ersten Schwellwertes (L1) den ersten Quantisierer (1) und den zweiten Prädiktor (6) und bei Überschreiten des zweiten Schwellwertes (L2) den vierten Quantisierer (4) und den ersten Prädiktor (5) einschaltet.

9. Adaptiver DPCM-Kodierer nach einem der Ansprüche 3 bis 8,
dadurch gekennzeichnet, daß die Steuerschaltung (9) bei eingeschaltetem vierten Quantisierer (4) und eingeschaltetem ersten Prädiktor (5) bei Überschreiten des zweiten Schwellwertes (L2) den vierten Quantisierer (4) und den ersten Prädiktor (5) eingeschaltet läßt und daß die Steuerschaltung (9) bei Unterschreiten des zweiten Schwellwertes (L2) den dritten Quantisierer (3) und ersten Prädiktor (5) einschaltet.

10. Adaptiver DPCM-Kodierer nach den Ansprüchen 3 bis 9,
dadurch gekennzeichnet, daß die Steuerschaltung (9) bei eingeschaltetem ersten Quantisierer (1) und eingeschaltetem zweiten Prädiktor (6) bei Unterschreiten des ersten Schwellwertes (L1) den ersten Quantisierer (1) und zweiten Prädiktor (6) eingeschaltet läßt und daß die Steuerschaltung (9) bei Überschreiten des ersten Schwellwertes (L1) den zweiten Quantisierer (2) und ersten Prädiktor (5) einschaltet.
